# EUROPEAN PATENT APPLICATION

(11) **EP 4 328 190 A1**
(43) Date of publication of application: **28.02.2024**
(21) Application number: 23805440.7
(22) Date of filing: 13.04.2023
(51) Int. Cl.: C02F 1/42, F17D 5/02, F16K 27/00, F16K 31/02, C02F 1/44, B01D 61/58, C02F 9/00

(54) **WATER LEAKAGE CONTROL METHOD AND APPARATUS FOR WATER SOFTENING DEVICE, AND ELECTRONIC DEVICE AND STORAGE MEDIUM**

(30) Priority: 30.05.2022 CN 202210605775
(71) Applicant: Foshan Midea Chungho Water Purification Equipment Co., Ltd., Foshan, Guangdong 528311 (CN); Midea Group Co., Ltd., Foshan, Guangdong 528311 (CN)
(72) Inventor: HAO, Zhipeng, Foshan, Guangdong 528311 (CN); HU, Chenghuan, Foshan, Guangdong 528311 (CN); QING, Pu, Foshan, Guangdong 528311 (CN); ZHANG, Bo, Foshan, Guangdong 528311 (CN); HUANG, Rensheng, Foshan, Guangdong 528311 (CN); GONG, Ziming, Foshan, Guangdong 528311 (CN); ZHENG, Yuedong, Foshan, Guangdong 528311 (CN); LIAO, Yumin, Foshan, Guangdong 528311 (CN)
(74) Representative: Whitlock, Holly Elizabeth Ann
(86) International application number: PCT/CN2023/088194
(87) International publication number: WO 2023/231604

(57) **Abstract**

The present application pertains to the field of water softening device, and provides a water leakage control method for a water softening device and an apparatus thereof, and an electronic device and a storage medium. The water leakage control method includes: determining that a target flow line is in a water leakage state based on a water-using parameter of the water softening device; and controlling a water inlet valve of the water softening device to be closed, and prompting that the target flow line is in the water leakage state; where the target flow line is a flow line located at a back end of the water inlet valve of the water softening device.

## Description

### CROSS-REFERENCE TO RELATED APPLICATION

The present application is based on and claims priority to Chinese patent application No. 202210605775.6 filed on May 30, 2022, entitled "Water Leakage Control Method for Water Softening Device and Apparatus Thereof, and Electronic Device and Storage Medium", which is hereby incorporated by reference in its entirety.

### FIELD

The present application pertains to the field of water softening devices, in particular to a water leakage control method for a water softening device and an apparatus thereof, and an electronic device and a storage medium.

### BACKGROUND

Water softeners are a kind of home appliance that makes hard tap water into soft water, which may improve the quality of household water. The principle of the water softener is to exchange calcium and magnesium ions in tap water use an exchange resin with sodium cations, to adsorb excess calcium and magnesium ions in tap water and to soften tap water.

At present, water softeners are generally installed by a user on a main pipeline of household water. Once a water leakage occurs in the pipeline or water point at the back end of the water softener, it may cause unavoidable major property losses. In the related art, since a user generally cannot find the water leakage at the back end of the water softener in time, the safety of water use in the home of the user cannot be guaranteed.

### SUMMARY

The present application has an object to solve at least one of the problems in the related art. Therefore, the present application provides a water leakage control method for a water softening device, which monitors the water softening device and the water leakage at the back end of the water softening device in time to ensure the safety of water use in the home of the user.

The present application further provides a water leakage control apparatus for a water softening device.

The present application further provides an electronic device.

The present application further provides a storage medium.

The present application further provides a computer program product.

A water leakage control method for a water softening device according to an embodiment of the present application includes:
determining that a target flow line is in a water leakage state based on a water-using parameter of the water softening device; and
controlling a water inlet valve of the water softening device to be closed, and prompting that the target flow line is in the water leakage state;
where the target flow line is a flow line located at a back end of the water inlet valve of the water softening device.

According to the water leakage control method for the water softening device provided by the embodiment of the present application, the water leakage event in the main flow line of using water is monitored in real time based on the water-using parameter of the water softening device. When it is determined that the water leakage occurs, the water inlet valve is closed in time to cut off the water flow in the main flow line, and the water leakage is prompted, so that the water softening device and the water leakage at the back end of the water softening device may be monitored in time and the corresponding countermeasures may be implemented to ensure the safety of water use in the home of the user.

According to an embodiment of the present application, the determining that the target flow line is in the water leakage state based on the water-using parameter of the water softening device includes:
determining that single water consumption exceeds a preset flow threshold based on the water-using parameter of the water softening device, and determining that the target flow line is in the water leakage state.

According to the water leakage control method for the water softening device provided by the embodiment of the present application, by monitoring whether the single water consumption exceeds the preset flow threshold, it is determined whether the water leakage occurs in the main flow line, and the water inlet valve of the flow line may be automatically closed in time after the water flow is monitored as excessive, so as to ensure the safety of water use in the home of the user.

According to an embodiment of the present application, the determining that the target flow line is in the water leakage state based on the water-using parameter of the water softening device includes:
determining that a duration of single water consumption exceeds a preset time threshold based on the water-using parameter of the water softening device, and determining that the target flow line is in the water leakage state.

According to the water leakage control method for the water softening device provided by the embodiment of the present application, by monitoring whether the duration of single water consumption exceeds the preset time threshold, it is determined whether the water leakage occurs in the main flow line, and the water inlet valve of the flow line may be automatically closed in time after water usage timeout is monitored, to ensure the safety of water use in the home of the user.

According to an embodiment of the present application, the determining that the target flow line is in the water leakage state based on the water-using parameter of the water softening device includes:
determining that water consumption is generated in a preset time duration based on the water-using parameter of the water softening device, and determining that the target flow line is in the water leakage state.

According to the water leakage control method for a water softening device of the embodiment of the present application, by monitoring whether water consumption is generated within the preset time duration, it is determined whether the water leakage occurs in the main flow line, and the water inlet valve of the flow line may be automatically closed in time after water flow is monitored during periods of non-use of water, so as to ensure the safety of water use in the home of the user.

The water leakage control method for a water softening device according to an embodiment of the present application further includes:
controlling the water inlet valve of the water softening device to be closed in response to a permeation monitoring trigger instruction; and
determining that a pressure change of the target flow line exceeds a preset pressure change threshold during a preset duration, determining that the target flow line is in a permeation state, and prompting that the target flow line is in the permeation state.

According to the water leakage control method for the water softening device provided by the embodiment of the present application, when a permeation monitoring procedure is triggered, the water inlet valve is closed to make the target flow line form a closed water flow pipeline, and then the pressure change in the target flow line is used to monitor the permeation, so that the permeation of the target flow line may be monitored in time to prompt the user to take timely repair measures.

According to an embodiment of the present application, the prompting that the target flow line is in the water leakage state includes at least one of:
prompting that the target flow line is in the water leakage state based on a buzzer;
prompting that the target flow line is in the water leakage state based on an indicator light; and
transmitting information indicating that the target flow line is in the water leakage state to a target terminal;
   and,
prompting that the target flow line is in the permeation state, including at least one of:
   prompting that the target flow line is in the permeation state based on a buzzer;
   prompting that the target flow line is in the permeation state based on an indicator light; and
   transmitting information indicating that the target flow line is in the permeation state to a target terminal.

According to the water leakage control method for a water softening device provided by the embodiment of the present application, when the flow line is monitored to be in the water leakage/permeation state, a water leakage/permeation prompt may be carried out in one or more ways, so as to facilitate the user to find the water leakage/permeation of the flow line in time and take countermeasures in time.

According to an embodiment of the present application, after the controlling the water inlet valve of the water softening device to be closed, and prompting that the target flow line is in the water leakage state, the water leakage control method further includes:
controlling the water inlet valve of the water softening device to be opened in response to a removal instruction of a hidden danger of water leakage.

According to the water leakage control method for the water softening device provided by the embodiment of the present application, when receiving the instruction from the user to remove the hidden danger of water leakage, the water inlet valve is automatically controlled to open to restore the normal water use of the main flow line, without manual operation of the water inlet valve, which further improves the convenience of water leakage control.

A water leakage control apparatus for a water softening device according to the embodiments of the present application includes:
a monitoring module, used to determine that a target flow line is in a water leakage state based on a water-using parameter of the water softening device; and
a controlling module, used to control a water inlet valve of the water softening device to be closed, and prompt that the target flow line is in the water leakage state;
where the target flow line is a flow line located at a back end of the water inlet valve of the water softening device.

An electronic device according to an embodiment of the present application includes: a memory, a processor and a computer program stored in the memory and is executable by the processor, when the computer program is executed by the processor, the water leakage control method for the water softening device mentioned above is performed.

A non-transient computer readable storage medium according to an embodiment of the present application, having a computer program stored therein, and when the computer program is executed by a processor, the water leakage control method for the water softening device mentioned above is performed.

A computer program product according to an embodiment of the present application includes a computer program, when the computer program is executed by a processor, the water leakage control method for the water softening device mentioned above is performed.

One or more of the above solutions in the embodiments according to the present application have at least one of the following effects.

The water leakage of the main flow line of using water is monitored in real time based on the water-using parameter of the water softening device. When the water leakage is determined, the water inlet valve is closed in time to cut off the water flow of the main flow line, and the water leakage is prompted. The present application monitors the water softening device and the water leakage at the back end of the water softening device in time and the corresponding countermeasures may be implemented to ensure the safety of water use in the home of the user.

Additional aspects and advantages of the present application are set forth, in part, from the following description, and the part is become clear from the following description, or is learned by practice of the present application.

### BRIEF DESCRIPTION OF THE DRAWINGS

In order to more clearly illustrate the solutions disclosed in the embodiments of the present application, the drawings used in the descriptions of the embodiments are briefly described below. The drawings in the following description are only of some embodiments of the present application, and other drawings may be obtained according to these drawings without any creative efforts for those skilled in the art.
FIG. 1 is a schematic flowchart of a water leakage control method for a water softening device according to an embodiment of the present application;
FIG. 2 is an output curve diagram of a sensor according to an embodiment of the present application;
FIG. 3 is a structural schematic diagram of a water leakage control apparatus for a water softening device according to an embodiment of the present application; and
FIG. 4 is a structural schematic diagram of an electronic device according to an embodiment of the present application.

### DETAILED DESCRIPTION

The following provides a clear description of the solutions in the present application in conjunction the embodiments with the accompanying drawings. It should be noted that the described embodiments are only used to explain the present application, rather than limit the protecting range.

It should be noted that with the improvement of living conditions, people pay more and more attention to household water use. Nowadays, there are more and more water softeners on the market. Water softeners may replace calcium and magnesium ions in water with sodium ions to soften high-hardness water into soft water, which may prolong the service life of back-end water-related appliances, and may care for and beautify skin and clothing.

At present, the water softener is generally installed on the main pipeline of household water by the user. The main pipeline is generally DN20 pipeline or DN25 pipeline. Once the water leakage occurs in the pipeline or water point at the back end of the water softener in home of the user, it may cause unavoidable major property losses. Thus, the water softener must have the function of water leakage monitoring, and the user may be informed in time when a hidden danger of water leakage occurs in the home of the user. The water softeners sold on the market do not have the function of water leakage monitoring and water leakage alarm, which cannot guarantee the safety of water use in the home of the user. Every year, the loss of products caused by water leakage events amounts to tens of millions of Chinese yuan. Since the safety of water use is as important as the safety of electricity use, effective solutions are needed urgently to ensure the safety of water use.

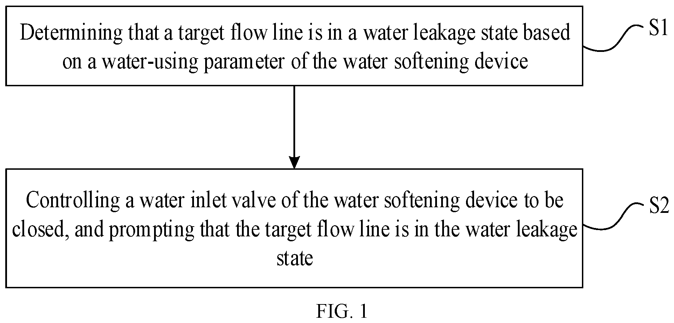

Referring to FIG. 1, a water leakage control method for a water softening device according to an embodiment of the present application includes:
block 1, a target flow line being in a water leakage state is determined based on a water-using parameter of the water softening device; and
block 2, a water inlet valve of the water softening device is controlled to be closed, and the target flow line is in the water leakage state is prompted;
where the target flow line is a flow line located at a back end of the water inlet valve of the water softening device.

In this embodiment, the water-using parameter of the main pipeline where the water softening device is located are collected in real time, and the water leakage is determined based on the real-time logic of the water-using parameter. The water-using parameter may include a flow speed, a flow rate, a pressure of a flow line, timing data, a water temperature and other parameters of the water in the flow line. The flow speed and flow rate may be collected or calculated by a flow sensor, the pressure of the flow line may be collected by a pressure sensor, the water temperature may be collected by a water temperature sensor, and the water temperature and water pressure may also be collected by a temperature and pressure integrated sensor.

For the collected water-using parameter, the water leakage monitoring may be carried out based on a preset determination logic. For example, water leakage monitoring means may include but not be limited to the following: 1. when single water consumption exceeds a preset flow threshold, the water leakage is determined; 2. when a duration of single water consumption exceeds a preset time threshold, the water leakage is determined; and 3. when a water flow is monitored outside a preset normal water-using duration, the water leakage is determined. The threshold of each determination means may be customized by the user. For example, when the user need a large amount of water or water for a long time, the determination threshold may be adjusted to a higher value to prevent the user from falsely triggering an automatic water leakage alarm during normal water use. After the end of single water consumption, the system may automatically restore the pre-configured standard threshold.

When the water leakage is determined, the system automatically controls the closing of the water inlet valve of the water softening device to cut off the water flow in the target channel and ensure the safety of water use and property of the user. Further, a signal is transmitted to prompt the user of the water leakage, to make the user timely notice the water leakage of the flow line and take countermeasures. The target flow line includes all the flow lines at the back end of the water inlet valve of the water softening device, and then the water leakage of the water softening device and all the water ends at the back end may be monitored by this scheme.

According to the water leakage control method for the water softening device provided by the embodiment of the present application, the water leakage in the main flow line of using water is monitored in real time based on the water-using parameter of the water softening device. When the water leakage is determined, the water inlet valve is closed in time to cut off the water flow in the main flow line, and the water leakage is prompted, so that the water softening device and the water leakage of the back end of the water softening device may be monitored in time and the corresponding countermeasures may be implemented to ensure the safety of water use in the home of the user.

In an embodiment, block 1 includes:
sub-block 11, single water consumption exceeds a preset flow threshold is determined based on the water-using parameter of the water softening device, and the target flow line is in the water leakage state is determined.

In this embodiment, according to the parameter of the flow rate of the flow line and timing data related to the water softening device, whether the water leakage occurs may be determined by whether the single water consumption used by the user exceeds the threshold. For example, when the flow rate changes, the water flow at this time is counted. When the water flow exceeds the preset threshold, it is determined that the water leakage occurs, triggering the closing of the water inlet valve and the water leakage alarm operation. If the water flow stops increasing before the water flow reaches the preset threshold, it indicates that it is artificial normal water use at this time. The water flow is cleared and recalculated until the next time the water flow is being generated. The determination threshold may be adjusted by the user. If a single large amount of water flow is needed, the threshold may be raised to prevent the system from being determined as water-leaking prematurely and triggering the valve closing and alarm by mistake.

According to the water leakage control method for the water softening device provided by the embodiment of the present application, by monitoring whether the single water consumption exceeds the preset flow threshold, it may be determined whether the water leakage occurs in the main flow line, and the water inlet valve of the flow line may be automatically closed in time after the water flow is monitored as excessive, so as to ensure the safety of water use in the home of the user.

In an embodiment, block 1 includes:
sub-block 12, a duration of single water consumption exceeds a preset time threshold is determined based on the water-using parameter of the water softening device, and the target flow line is in the water leakage state is determined.

In this embodiment, a timer starts timing when the water flow is generated. If it is determined that a duration of water consumption exceeds the preset time threshold (such as one hour), it is determined that the water leakage occurs, triggering the closing of the water inlet valve and the water leakage alarm operation.

In other embodiments, water consumption and duration of water consumption may also be used to determine whether the water leakage occurs, that is, when the water flow exceeds the threshold and the duration of single water consumption exceeds the preset duration, it is determined that water leakage occurs.

According to the water leakage control method for the water softening device provided by the embodiment of the present application, by monitoring whether the duration of single water consumption exceeds the preset time threshold, it may be determined whether the water leakage occurs in the main flow line, and the water inlet valve of the flow line may be automatically closed in time after water usage timeout is monitored, to ensure the safety of water use in the home of the user. It should be noted that when water leakage occurs in reality, it does not always produce a large amount of water flow. In this regard, this embodiment determines whether water leakage occurs according to the duration of single water consumption, which makes up for the failure to cover the situation when monitoring water leakage according to water flow, and further improves the accuracy and universality of water leakage monitoring.

In an embodiment, block 1 includes:
sub-block 13, water consumption is generated in the target flow line during a preset time duration is determined based on the water-using parameter of the water softening device, and the target flow line is in the water leakage state is determined.

It should be noted that a user often has regular water habits. For example, the user only uses water in the morning, noon and evening on weekdays, and the user may use water all day on weekends. Therefore, the user may set the corresponding water use period or period of non-use of water according to their own needs. Then in the period of non-use of water, if the system monitors the water flow generated in the flow line, it is likely that water leakage occurs in the pipeline at this time. The system automatically determines that the target flow line is in a state of water leakage, triggering the closing of the water inlet valve and the water leakage alarm operation.

According to the water leakage control method for the water softening device provided by the embodiment of the present application, by monitoring whether water consumption is generated during the preset time duration, it is determined whether the water leakage occurs in the main flow line, and the water inlet valve of the flow line may be automatically closed in time after water flow is monitored during periods of non-use of water, to ensure the safety of water use in the home of the user. The user may set the corresponding water use period or period of non-use of water based on their own water use habits, and use the flow rate change of the flow line at this time period as the basis for determining the water leakage. Before triggering the single water excessive or overtime determination condition, the water leakage of the flow line may be monitored more quickly, which further improves the accuracy and reliability of the water leakage monitoring.

In an embodiment, the water leakage control method for the water softening device includes:
block 3, the water inlet valve of the water softening device is controlled to be closed in response to a permeation monitoring trigger instruction; and
block 4, a pressure change of the target flow line exceeds a preset pressure change threshold during a preset duration is determined, the target flow line is in a permeation state is determined, and the target flow line is in the permeation state is prompted.

In this embodiment, the system may automatically trigger the permeation monitoring procedure on a regular basis, or the user may initiate the permeation monitoring procedure through the trigger button on the water softening device according to the demand (or through an APP remote control). When the permeation monitoring procedure is triggered, the water inlet valve is controlled to close. In addition, the flow line at the back end of the water inlet valve of the water softening device forms a closed water flow pipeline. Then, according to whether the water pressures in the pipeline measured before and after the permeation monitoring procedure is triggered are the same (or whether the difference is small enough), it is determined whether the water flow pipeline has permeation. It should be noted when no permeation exists in the closed pipeline, the pressure of the water in the pipeline would not change; and when permeation exists in the closed pipeline, the pressure of the water in the pipeline would become lower. During a permeation test, when the pressure change in the pipeline exceeds 0.05 MPa (pressure change threshold), it is determined that the permeation occurs in the closed flow line.

It should be noted that after the end of the permeation monitoring procedure (which is determined to be the end of the permeation monitoring procedure after the permeation monitoring procedure is determined to be the occurrence of leakage, or after the preset monitoring time is reached), the system may automatically control the water inlet valve of the water softening device to open and restore the normal water use of the target flow line. If it is determined that permeation occurs, the system transmits permeation prompt information, which may be prompted by a buzzer, an indicator light, an APP, etc. In addition, since the permeation is a local nuisance leakage, in order to ensure the normal water use of the user, the water inlet valve of the water softening device may be automatically controlled to be opened, or the water inlet valve may be kept closed, and the user may choose whether to open the water inlet valve.

According to the water leakage control method for the water softening device provided by the embodiment of the present application, when a permeation monitoring procedure is triggered, the water inlet valve is closed to make the target flow line form a closed water flow pipeline, and then the pressure change in the target flow line is used to monitor the leakage, so that the leakage of the target flow line may be monitored in time to prompt user to take timely repair measures.

In an embodiment, the target flow line is in the water leakage state is prompted by at least one of:
prompting that the target flow line is in the water leakage state based on a buzzer;
prompting that the target flow line is in the water leakage state based on an indicator light; and
transmitting information indicating that the target flow line is in the water leakage state to a target terminal;
   and,
the target flow line is in the permeation state is prompted by at least one of:
   prompting that the target flow line is in the permeation state based on a buzzer;
   prompting that the target flow line is in the permeation state based on an indicator light; and
   transmitting information indicating that the target flow line is in the permeation state to a target terminal.

In this embodiment, the target terminal may be a mobile terminal such as a mobile phone. The water softening device is communicated with Wi-Fi, and the prompt information of the target flow line in the water leakage/permeation state may be transmitted to the mobile terminal through an APP, to make the user timely notice the water leakage/permeation of the water softening device. The target terminal may also be a remote information terminal communicated with the water softening device through wired or wireless communication, such as a terminal with display function or sound and light alarm function. The remote terminal may be arranged in a more prominent position such as the living room of the home of the user, so that the user may timely notice the water leakage/permeation of the water softening device. Since the water softening device is generally installed in a hidden place such as under a counter in the kitchen, when the user is in the living room or outdoors, it is difficult to convey the signal of water leakage in the pipeline to the user in time by the buzzer or the prompt lamp alone. Therefore, when determining the occurrence of water leakage/permeation in the flow line, one or more ways may be configured according to the actual needs for water leakage/permeation prompts, such as ringing the buzzer, lighting the indicator light, triggering the sound and light alarm, and transmitting to the remote target terminal.

According to the water leakage control method for the water softening device provided by the embodiment of the present application, when the flow line is monitored to be in the water leakage/permeation state, a water leakage/permeation prompt may be carried out in one or more ways, to facilitate user to find the water leakage/permeation of the flow line in time and take countermeasures in time.

In an embodiment, after block 2, the water leakage control method further includes:
block 21, the water inlet valve of the water softening device is controlled to be opened in response to a removal instruction of a hidden danger of water leakage.

In this embodiment, after the user is prompted to have a pipeline leakage, the user may eliminate the hidden danger of water leakage after receiving the prompt signal. After eliminating the hidden danger of water leakage, the instruction to remove the hidden danger of water leakage may be triggered (which may be controlled by the release button on the soft water device or through a remote APP). The system automatically controls the opening of the water inlet valve of the water softening device to restore the normal water use of the user.

According to the water leakage control method for the water softening device provided by the embodiment of the present application, when receiving the instruction from user to remove the hidden danger of water leakage, the water inlet valve is automatically controlled to be opened to restore the normal water use of the main flow line, without manual operation of the water inlet valve, which further improves the convenience of water leakage control.

Based on the above scheme, in order to better explain the water leakage control method for the water softening device according to the embodiments of the present application, the following specific examples are listed for detailed explanation.

Temperature and pressure integrated sensor, high-precision flow sensor and other monitoring unit may be installed on the main flow line (the target flow line that needs to be monitored water leakage) where the water softening device is located. As an example, the parameter information of the temperature and pressure integrated sensor are shown in the following table:

| Range | 0∼16 Bar |
|---|---|
| Supply voltage | DC 3.3 V |
| Output voltage | DC 0.35-2.7 V |
| Working temperature | -20 °C∼85 °C |
| Accuracy level | 2% FS |
| Mounting torque | < 30 N·m |
| Overload pressure | 150% |
| Temperature accuracy | 2% |

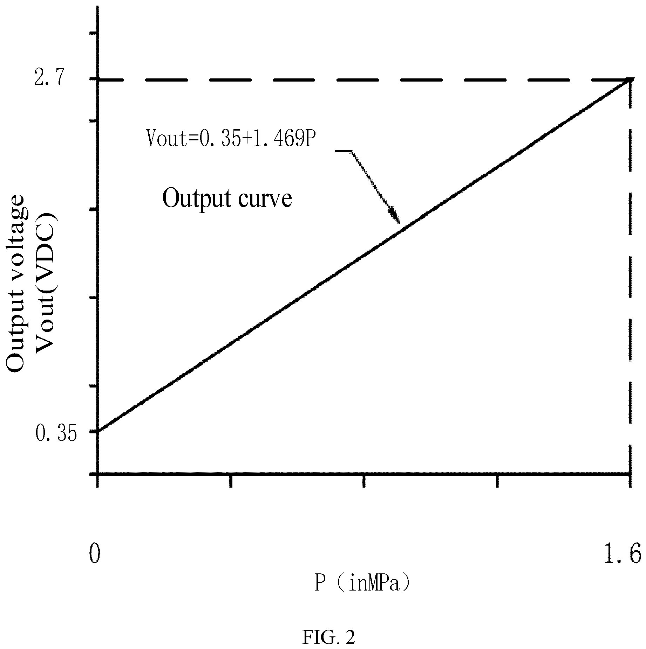

The temperature and pressure integrated sensor may logically calculate the temperature and pressure of water in the pipeline according to the change of voltage under different pressures. The relationship between the output voltage of the sensor and the pressure may be expressed by the output curve of FIG. 2. The expression of the output curve may be expressed as: *Vₒᵤₜ*=0.35 +1.469*P*, where *Vₒᵤₜ* is the output voltage, and *P* is the corresponding pressure. Therefore, the corresponding relationship between the output voltage and the pressure is shown in the following table:

| | | | | | | | | | | | | | | | | | |
|---|---|---|---|---|---|---|---|---|---|---|---|---|---|---|---|---|---|
| *P*(MPa ) | 0 | 0.1 | 0.2 | 0.3 | 0.4 | 0.5 | 0.6 | 0.7 | 0.8 | 0.9 | 1.0 | 1.1 | 1.2 | 1.3 | 1.4 | 1.5 | 1.6 |
| *Vₒᵤₜ* | 0.35 | 0.49 | 0.64 | 0.79 | 0.93 | 1.08 | 1.23 | 1.38 | 1.52 | 1.67 | 1.82 | 1.96 | 2.11 | 2.26 | 2.4 | 2.55 | 2.7 |

As an example, the parameter information of the high-precision flow sensor used in this embodiment is shown in the following table.

| | |
|---|---|
| Working voltage | DC 5 V |
| Current consumption | < 5 mA |
| Protection level | IP68 |
| Working environment temperature | -40 °C∼-60 °C |
| Temperature of working medium | 2∼40°C |
| Housing material | PPO |
| Stable monitoring range | 2∼14 GPM |
| Monitoring precision | ±5% |
| Signal property | 61/L |

where the signal property of 61/L is the number of pulses, 61 pulses correspond to 1 L water, which is suitable for software logic calculation to real-time monitoring of user water consumption.

A closed working position (the control valve of the water softener on the market does not have a closed working position) is provided in a control valve of the water softener. When the main flow line needs to be closed, the water flow may be closed and cut off in real time.

The appearance of the water softener is provided with a state indicator light, which may indicate different water use states.

The water softener may communicate with Wi-Fi, and may display the water state of the machine in real time on the APP, such as water consumption, water use time, peak water consumption, water temperature, water pressure and so on.

The water softener is provided with a buzzer. When a prompter is needed, the buzzer emits a buzz. A flowmeter is a standard necessary configuration for the water softener, and the temperature and pressure integrated sensor is an upgraded configuration.

Water leakage monitoring and control logic is as follows.

### I, single excessive water consumption alarm

When the flowmeter is started once and the single water consumption exceeds the value set by the user through logical calculation, the single excessive water consumption is alarmed, and the electronically-controlled drive control valve enters the closed position and closes the main flow line water inlet closed position. In addition, the buzzer sounds and the machine appearance display light are turned on, and the information is transmitted to the user through the APP. Under this determination logic, the leakage belongs to local serious leakage, then a control valve cuts off the water flow to ensure the safety of water use and property of the user.

After confirming the danger of the leakage point is removed, the user may manually open the closed position (or the user triggers the instruction to open the valve, and the system automatically opens the valve) of the valve head, and the flow line returns to the normal state.

As an example, the leakage monitoring and control process may be shown in the following steps: 1, the flowmeter is started; 2, single water consumption is more than the preset value; 3, the logic control valve enters the closed position to close the pipeline water flow; 4, a buzzer sounded a prompter; 5, the external indicator light of the machine is on; 6, APP synchronously transmits information; 7, the user exclude water leakage risks; 8, opening the control valve into the working position; and 9, pipeline water flow returns to normal water use.

### II, single water consumption timeout alarm

When the flowmeter is started once and the duration of single water consumption exceeds the value set by the user through logical calculation, the timeout of single water of use is alarmed, and the electronically-controlled drive control valve enters the closed position and closes the main flow line water inlet. In addition, the buzzer sounds and the machine appearance display light are turned on, and the information is transmitted to the user through the APP. Under this determination logic, the leakage belongs to local serious leakage, then a control valve cuts off the water flow to ensure the safety of water use and property of the user.

After confirming the danger of the leakage point is removed, the user may manually open the closed position (or the user triggers the instruction to open the valve, and the system automatically opens the valve) of the valve head, and the flow line returns to the normal state.

As an example, the leakage monitoring and control process may be shown in the following steps: 1, the flowmeter is started; 2, duration of single water consumption exceeds the preset value; 3, the logic control valve enters the closed position to close the pipeline water flow; 4, a buzzer sounded a prompter; 5, the external indicator light of the machine is on; 6, APP synchronously transmits information; 7, the user exclude water leakage risks; 8, opening the control valve into the working position; and 9, pipeline water flow returns to normal water use.

### III, permeation test alarm

The temperature and pressure integrated sensor may monitor the temperature and pressure of water in the pipeline in real time, and may display more information data to the user, and the APP interface shows richer and more specific content. Without a temperature and pressure integrated sensor, it is impossible to provide information such as water pressure and temperature.

The permeation test alarm logic is: starting the permeation test procedure by electronically-controlled timing (or the user manually triggers to start the leakage test procedure), the valve entering a closed position through the control of a software, and closing the main flow line inlet. As such, the back end of the valve head of the water softener and the water pipeline of the whole house is a closed water pipeline.

When no permeation exists in the closed pipeline, the pressure of the water in the pipeline will not change.

When permeation exists in the closed pipeline, the pressure of water in the pipeline would become lower. During a permeation test, when the pressure change measured in last two times exceed the preset value (such as 0.05 MPa), the leakage alarm procedure is entered. In addition, the electronically-controlled drive control valve enters the working position, opens the main flow line water inlet, and restores normal water flow (the permeation is a local nuisance leakage, and the control valve may not cut off the water flow treatment to ensure the normal water use). The control valve may also be kept in the closed position, to be determined manually and chosen whether to restore the water, the buzzer sounds and the machine appearance display light are turned on, and the information is transmitted to the user through the APP.

As an example, the leakage monitoring and control process may be shown in the following steps: 1, the permeation test procedure is started; 2, the logic control valve enters the closed position to close the pipeline water flow; 3, the sensor collects the water pressure in the closed pipeline; 4, the pressure change exceeds the preset value; 5, the permeation alarm procedure starts; 6, buzzer sounded a prompter; 7. the external indicator light of the machine is on; and 8.APP synchronously transmits information.

Compared with the prior art, the embodiments of the present application have the following effects: through the combination of hardware and logic algorithm of the water softener, it may be automatically determined whether the household water environment is safe and corresponding control measures may be made, to achieve the effect of fully automatic water safety without manual duty.

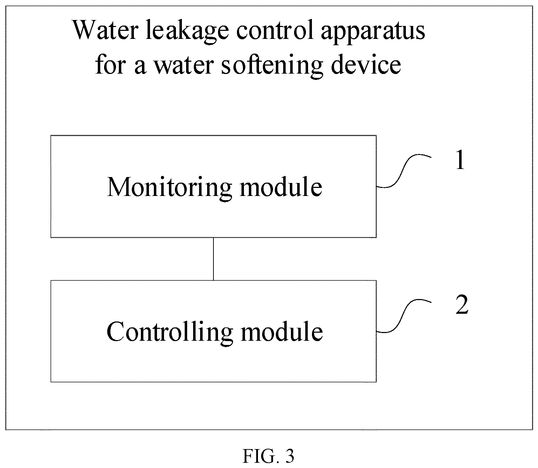

Referring to FIG. 3, a water leakage control apparatus for a water softening device according to an embodiment of the present application includes:
a monitoring module 1, used to determine that a target flow line is in a water leakage state based on a water-using parameter of the water softening device; and
a controlling module 2, used to control a water inlet valve of the water softening device to be closed, and prompt that the target flow line is in the water leakage state;
where the target flow line is a flow line located at a back end of the water inlet valve of the water softening device.

In an embodiment, the monitoring module 1 is used to:
determine that single water consumption exceeds a preset flow threshold based on the water-using parameter of the water softening device, and determine that the target flow line is in the water leakage state.

In an embodiment, the monitoring module 1 is used to:
determine that a duration of single water consumption exceeds a preset time threshold based on the water-using parameter of the water softening device, and determine that the target flow line is in the water leakage state.

In an embodiment, the monitoring module 1 is used to:
determine that water consumption is generated in the target flow line during a preset time duration based on the water-using parameter of the water softening device, and determine that the target flow line is in the water leakage state.

In an embodiment, the water leakage control apparatus for the water softening device further includes a second monitoring module, which is used to:
control the water inlet valve of the water softening device to be closed in response to a permeation monitoring trigger instruction; and
determine that a pressure change of the target flow line exceeds a preset pressure change threshold during the preset duration, determine that the target flow line is in a leakage state, and prompting that the target flow line is in the leakage state.

In an embodiment, the prompting that the target flow line is in the water leakage state includes at least one of:
prompting that the target flow line is in the water leakage state based on a buzzer;
prompting that the target flow line is in the water leakage state based on an indicator light; and
transmitting information indicating that the target flow line is in the water leakage state to a target terminal;
   and,
prompting that the target flow line is in the permeation state, including at least one of:
   prompting that the target flow line is in the permeation state based on a buzzer;
   prompting that the target flow line is in the permeation state based on an indicator light; and
   transmitting information indicating that the target flow line is in the permeation state to a target terminal.

In an embodiment, the water leakage control apparatus for the water softening device further includes a second controlling module, which is used to:
control the water inlet valve of the water softening device to be opened in response to a removal instruction of a hidden danger of water leakage.

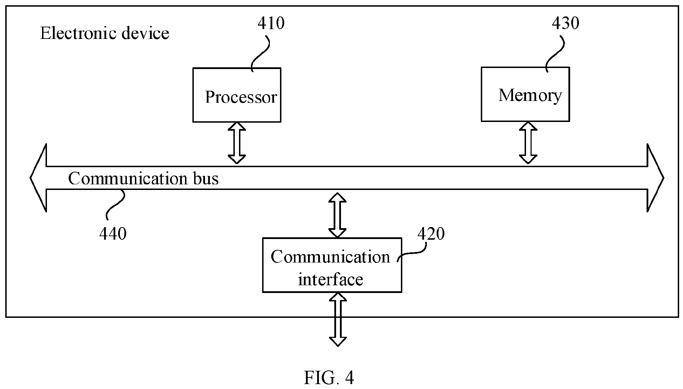

FIG. 4 is a structural schematic diagram of an electronic device. As shown in FIG. 4, the electronic device may include: a processor 410, a communications interface 420, a memory 430, and a communication bus 440, where the processor 410, the communication interface 420, and the memory 430 communicate with each other through the communication bus 440. The processor 410 may invoke logical instructions stored in the memory 430 to execute the water leakage control method for a water softening device, the method including:
block 1, a target flow line is in a water leakage state is determined based on a water-using parameter of the water softening device; and
block 2, a water inlet valve of the water softening device is controlled to be closed, and the target flow line is in the water leakage state is prompted;
where the target flow line is a flow line located at a back end of the water inlet valve of the water softening device.

In addition, the logical instructions stored in the memory 430 mentioned above may be implemented in a form of software functional unit and stored in a computer-readable storage medium when sold or used as independent products. Based on such understanding, the solution of the present application, in essence, or the portion that contributes to the related art or the portion of the solution, may be embodied in a form of a software product, and the software product is stored in a storage medium, the storage medium storing several instructions to enable a computer device (which may be a personal computer, a server, or network device, etc.) to perform all or part of the steps of the methods described in various embodiments of the present application. The aforementioned storage media include various media that may store program codes, such as flash drives, removable hard drives, read only memory (ROM), random access memory (RAM), magnetic disks, or optical disks, etc.

On the other hand, the present application further provides a computer program product, and the computer program product includes a computer program stored in a non-transient computer-readable storage medium. The program, when executed by a processor, causes the processor to perform the water leakage control method for a water softening device, the method including:
block 1, a target flow line is in a water leakage state is determined based on a water-using parameter of the water softening device; and
block 2, a water inlet valve of the water softening device is controlled to be closed, and the target flow line is in the water leakage state is prompted;
where the target flow line is a flow line located at a back end of the water inlet valve of the water softening device.

On the other hand, the present application further provides a non-transient computer-readable storage medium storing a program. The program, when executed by a processor, causes the processor to perform the water leakage control method for a water softening device, the method including:
block 1, a target flow line is in a water leakage state is determined based on a water-using parameter of the water softening device; and
block 2, a water inlet valve of the water softening device is controlled to be closed, and the target flow line is in the water leakage state is prompted;
where the target flow line is a flow line located at a back end of the water inlet valve of the water softening device.

The apparatus embodiments described above are only schematic, where the units described as separate parts may be or may not be physically separated, and the parts displayed as units may be or may not be physical units, that is, they may be located in one place or distributed across a plurality of network units. Some or all modules may be selected according to actual needs to achieve objectives of the solution of the present embodiment. Those Ordinarily skilled in the art may understand and implement without creative effort.

Through the description of the above embodiments, those skilled in the art may clearly understand that each embodiment may be achieved through software and necessary universal hardware platforms, and of course, the embodiment may also be achieved through hardware. Based on such understanding, the solutions mentioned above, or the parts that contribute to the related art may be reflected in a form of software product, the software product may be stored in computer-readable storage media such as ROM/RAM, magnetic disks, optical disks, etc. The storage medium includes several instructions to enable a computer device (which may be a personal computer, a server, or a network device, etc..) to execute the methods described in various embodiments or certain parts of the embodiments.

It should be noted that, the aforementioned embodiments are only used to illustrate the solution of the present application, not to limit it; although the present application is described in detail with reference to the aforementioned embodiments, those ordinarily skilled in the art should understand that they may still modify the solutions recorded in the aforementioned embodiments, or equivalently replace some of the technical features; and these modifications or replacements do not separate the essence of the corresponding solutions from the scope of the solutions of the various embodiments of the present application.

## Claims

1. A water leakage control method for a water softening device, comprising:
determining that a target flow line is in a water leakage state based on a water-using parameter of the water softening device; and
controlling a water inlet valve of the water softening device to be closed, and prompting that the target flow line is in the water leakage state;
wherein the target flow line is a flow line located at a back end of the water inlet valve of the water softening device.

2. The water leakage control method of claim 1, wherein the determining that the target flow line is in the water leakage state based on the water-using parameter of the water softening device comprises:
determining that single water consumption exceeds a preset flow threshold based on the water-using parameter of the water softening device, and determining that the target flow line is in the water leakage state.

3. The water leakage control method of claim 1 or claim 2, wherein the determining that the target flow line is in the water leakage state based on the water-using parameter of the water softening device comprises:
determining that a duration of single water consumption exceeds a preset time threshold based on the water-using parameter of the water softening device, and determining that the target flow line is in the water leakage state.

4. The water leakage control method of any one of claims 1 to 3, wherein the determining that the target flow line is in the water leakage state based on the water-using parameter of the water softening device comprises:
determining that water consumption is generated in the target flow line during a preset time duration based on the water-using parameter of the water softening device, and determining that the target flow line is in the water leakage state.

5. The water leakage control method of any one of claims 1 to 4, further comprising:
controlling the water inlet valve of the water softening device to be closed in response to a permeation monitoring trigger instruction; and
determining that a pressure change of the target flow line exceeds a preset pressure change threshold during a preset duration, determining that the target flow line is in a permeation state, and prompting that the target flow line is in the permeation state.

6. The water leakage control method of claim 5, the prompting that the target flow line is in the water leakage state comprises at least one of:
prompting that the target flow line is in the water leakage state based on a buzzer;
prompting that the target flow line is in the water leakage state based on an indicator light; and
transmitting information indicating that the target flow line is in the water leakage state to a target terminal;
and,
prompting that the target flow line is in the permeation state comprises at least one of:
prompting that the target flow line is in the permeation state based on a buzzer;
prompting that the target flow line is in the permeation state based on an indicator light; and
transmitting information indicating that the target flow line is in the permeation state to a target terminal.

7. The water leakage control method of any one of claims 1 to 6, wherein after the controlling the water inlet valve of the water softening device to be closed, and prompting that the target flow line is in the water leakage state, the water leakage control method further comprises:
controlling the water inlet valve of the water softening device to be opened in response to a removal instruction of a hidden danger of water leakage.

8. A water leakage control apparatus for a water softening device, comprising:
a monitoring module, used to determine that a target flow line is in a water leakage state based on a water-using parameter of the water softening device; and
a controlling module, used to control a water inlet valve of the water softening device to be closed, and prompt that the target flow line is in the water leakage state;
wherein the target flow line is a flow line located at a back end of the water inlet valve of the water softening device.

9. An electronic device, comprising: a processor; and a memory storing a computer program that is executable by the processor, wherein the computer program, when executed by the processor, causes the electronic device to perform the water leakage control method for the water softening device of any one of claims 1 to 7.

10. A non-transient computer-readable storage medium, storing a computer program, and the computer program, when executed by a processor, causes the processor to perform the water leakage control method for the water softening device in any one of claims 1 to 7.

11. A computer program product, comprising a computer program, and the computer program, when executed by a processor, causes the processor to perform the water leakage control method for the water softening device in any one of claims 1 to 7.
